# EUROPEAN PATENT SPECIFICATION

(11) **EP 3 677 416 B1**
(45) Date of publication and mention of the grant of the patent: **05.07.2023**
(21) Application number: 18889888.6
(22) Date of filing: 03.09.2018
(51) Int. Cl.: B29D 30/00, B23K 26/00, B23K 26/36, B60C 19/00, B60C 23/04, G01L 17/00

(54) **RUBBER MEMBER ATTACHMENT METHOD AND TIRE WITH SENSOR**
VERFAHREN ZUR BEFESTIGUNG EINES GUMMIKÖRPERS UND REIFEN MIT SENSOR
PROCÉDÉ DE FIXATION D'ÉLÉMENT EN CAOUTCHOUC ET PNEU COMPRENANT UN CAPTEUR

(30) Priority: 15.12.2017 JP 2017241151
(43) Date of publication of application: 08.07.2020
(73) Proprietor: Bridgestone Corporation, Chuo-Ku Tokyo 104-8340 (JP)
(72) Inventor: NISHIDA Mitsuhiro, Tokyo 104-8340 (JP)
(74) Representative: Marks & Clerk LLP
(86) International application number: PCT/JP2018/032527
(87) International publication number: WO 2019/116645

(56) References cited:
- EP-A1- 3 141 381
- WO-A1-2017/082162
- DE-A1-102007 030 231
- JP-A- 2009 166 745
- JP-A- 2015 116 689
- JP-A- 2015 116 689
- JP-A- 2015 214 065
- JP-A- 2016 078 232
- JP-A- 2017 105 037
- JP-A- 2017 140 609

## Description

### TECHNICAL FIELD

The present invention relates to a method of attaching a rubber member, which is configured to mount thereon or house therein a sensor module, on an inner surface of the tire.

### BACKGROUND

In general, there has been practiced that, when acquiring information of a tire such as a tire inner pressure, a tire temperature or a tire deformation amount, a sensor module is attached to a surface of an inner liner that is an inner surface side of the tire by an adhesive agent or the like. The sensor module includes sensors such as a pressure sensor, a temperature sensor or a piezoelectric element attached to a substrate having an amplifier, a transmitter and so on mounted thereon, and also includes a housing for protecting these elements.

Incidentally, in a method in which the above-mentioned sensor module is directly fixed to the inner liner, there has been a problem that when an input to the tire is large, deformation of rubber becomes large. As a result, the sensor module is peeled off from the inner liner when driving a long-distance.

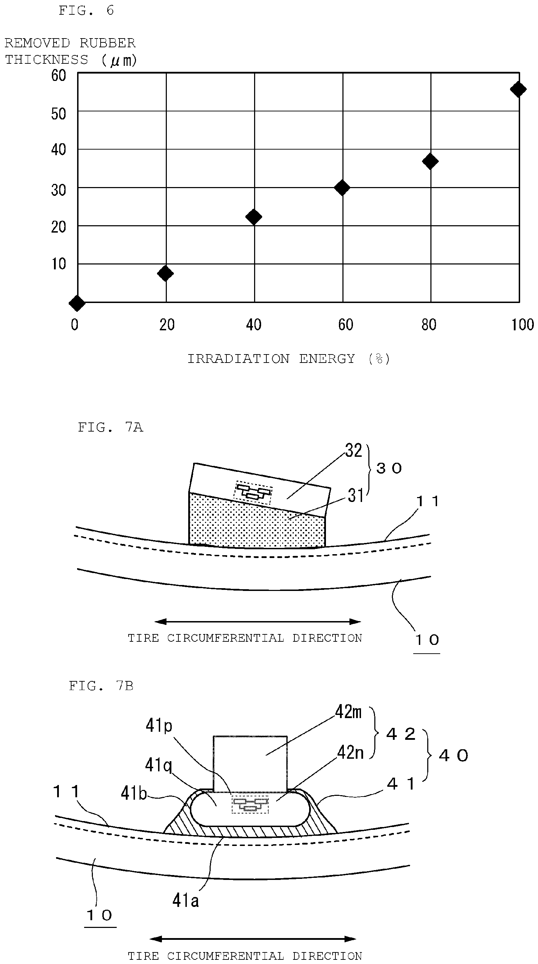

Accordingly, in order to relax the stress acting between the sensor module and a rubber member of the inner liner, there has been proposed a tire information acquisition device 30 in which, as illustrated in FIG. 7A, a rubber base 31 is adhered and fixed on the surface of an inner liner 11 that is an inner surface side of a tire 10 by using an adhesive agent for rubber such as a chloroprene-based adhesive agent, or a tire information acquisition device 40 in which, as illustrated in FIG. 7B, a sensor module 42 is housed in a rubber base 41 having an opening part 41p which serves as an insert/remove port for inserting and removing a mounting part 42n connected to a holding part 42m of the sensor module 42, and a housing recess part 41q which houses the mounting part 41n and which is surrounded by a bottom part 41a to be adhered to the surface of the inner liner 11 and a side wall part 41b that connects the bottom part 41a and the opening part 41p (for example, see Patent Documents 1 and 2).

### CITATION LIST

### Patent Document

Patent Document 1: Japanese Unexamined Patent Application Publication No. 2009-166745.
Patent Document 2: Japanese Unexamined Patent Application Publication No. 2015-160512. Attention is also drawn to the disclosure of EP 3,141,381.

### SUMMARY OF THE INVENTION

### Technical Problem

However, because a mold release agent applied layer having a mold release agent, such as silicone to be used at the time of vulcanization, adhered thereon is formed on the surface of the rubber member which constitutes the inner liner 11, there has been a problem that the rubber base 31 or the rubber base 41 is easily peeled off.

Therefore, normally, a method is performed in which the mold release agent applied layer is removed by cleaning the surface of the inner liner 11 with the use of an organic solvent. However, since not only cleaning by the organic solvent takes time, but also it is difficult to remove the mold release agent in the vicinity of a ridge, adhesiveness of the rubber base 31 or of the rubber base 41 has not been sufficient enough.

Further, it is also conceivable to use a method of removing the mold release agent applied layer by buffing or sandblast treatment, however, in this case as well, there is a problem that not only it takes time to sufficiently remove the mold release agent applied layer, but also the rubber member of the inner liner 11 is shaved off, resulting in greatly damaging the inner liner 11.

The present invention has been made in view of the conventional problems and aims at providing a method of efficiently removing a mold release agent applied layer and securely adhering and fixing a rubber member on a surface of an inner liner.

Patent document DE 10 2007 030231 A1 discloses a procedure for affixing a rubber member on the inside of a tire comprising; identification of the attachment position, irradiation of the position with a laser to remove unwanted material and affixing the rubber member.

### Solution to Problem

The present invention relates to a method of attaching a rubber member on an inner surface of a tire, including: a step (a) of identifying an attachment position for attaching the rubber member; a step (b) of irradiating laser light to the attachment position to remove a mold release agent applied layer formed on a surface of a rubber layer, which is located at the attachment position and which configures an inner liner; a step (c) of irradiating laser light with less irradiation energy than that of the laser light irradiated in the step (b) to the position where the mold release agent applied layer has been removed, to remove the surface of the rubber layer located at the attachment position; and a step (d) of adhering the rubber member to the attachment position.

The summary of the invention does not enumerate all the features required for the present invention, and sub-combinations of these features may also become the invention.

### BRIEF DESCRIPTION OF THE DRAWINGS

FIG. 1 is a flowchart illustrating a method of attaching a rubber base according to an embodiment of the present invention;
FIGS. 2A and 2B are views each illustrating the method of attaching the rubber base according to the embodiment of the present invention;
FIGS. 3A to 3E are views each illustrating the method of attaching the rubber base according to the embodiment of the present invention;
FIG. 4 is a table illustrating a relationship between irradiation energy of laser light and a thickness of a removed rubber:
FIG. 5 is a table illustrating a relationship between the irradiation energy of laser light and silicone removability:
FIG. 6 is a graph illustrating check results of silicone removability and rubber adhesiveness after irradiating the laser light to a surface of an inner liner; and
FIGS. 7A and 7B are views each illustrating an example of a tire information acquisition device.

### DESCRIPTION OF EMBODIMENTS

### Embodiments

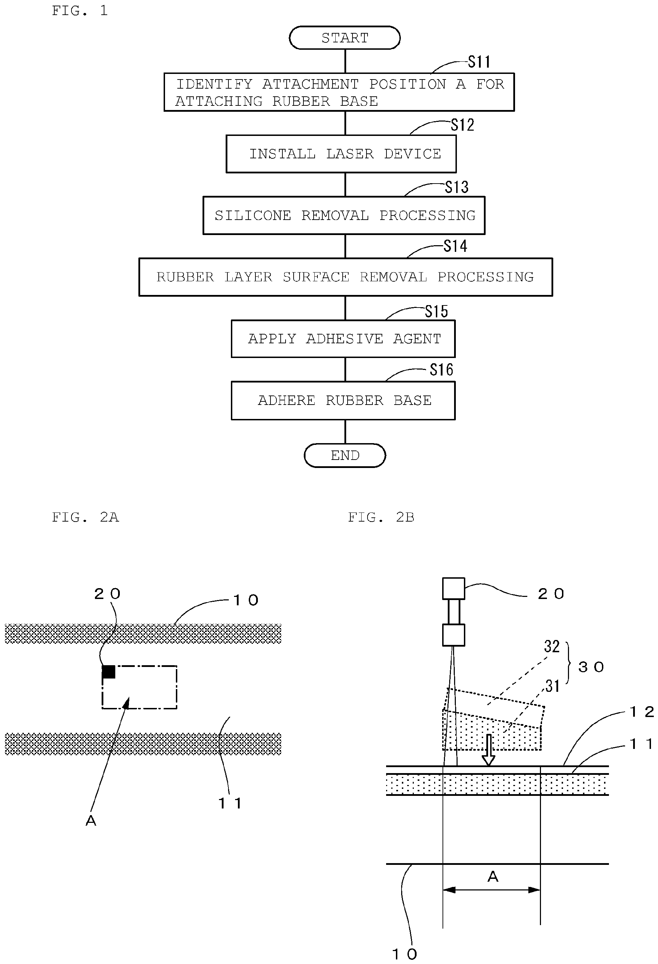

Hereinafter, a method of attaching a rubber base according to an embodiment of the present invention will be described with reference to the flowchart in FIG. 1.

First of all, as illustrated in FIGS. 2A and 2B, after identifying an attachment position A for attaching a rubber base 31 on an inner surface side of an inner liner 11 of a tire 10 (step S 11), a laser device 20 and a not-shown moving means for moving the laser device 20 are disposed on the inner surface side of the tire, that is, above the attachment position A (step S12).

In the present embodiment, as the rubber base 31, a rubber base 31 to be disposed between a sensor module 32 and the inner liner 11 was used, as illustrated in FIG. 7A.

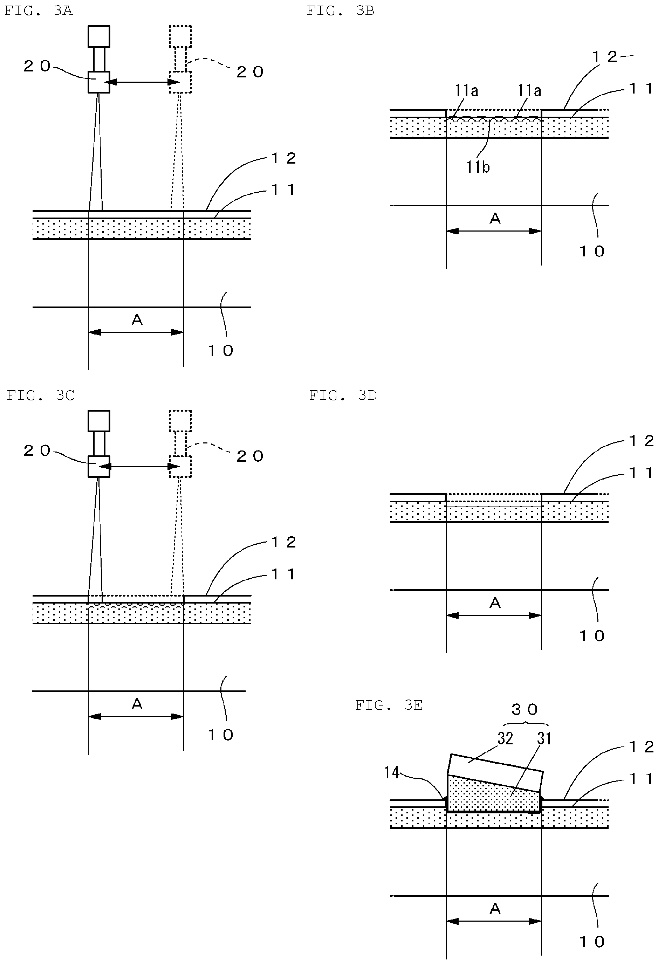

Next, as illustrated in FIG. 3A, silicone removal processing is performed for removing, by laser processing, a silicone layer 12 that is a mold release agent applied layer formed on the inner surface side of the inner liner 11 (step S13).

Meantime, the thickness of the rubber member constituting the inner liner 11 is about 1 mm and the thickness of the silicone layer 12 is about 10 to 100 µm.

Here, assuming that the maximum irradiation energy, which is irradiation energy of the laser light achieved when the laser device 20 is set to the maximum output, is P₀. The maximum irradiation energy P₀ is, as illustrated in the graph of FIG.6, the irradiation energy (about 10W) capable of removing about 58 µm of the rubber of the inner liner by three times of irradiations. Incidentally, when the irradiation energy is set to P₁ = 0.8 × P₀, about 37 µm of the rubber of the inner liner can be removed by three times of irradiations, and when the irradiation energy is set to P₂ = 0.6 × P₀, about 30 µm of the rubber of the inner liner can be removed by three times of irradiations. Further, when the irradiation energy is set to P₁ = 0.4 × P₀, about 22 µm of the rubber of the inner liner can be removed by three times of irradiations.

In the present embodiment, the irradiation energy in the silicone removal processing is set to P₁ = 0.8 × P₀, and the laser device 20 is moved at a predetermined moving speed in the tire circumferential direction and in the tire width direction for scanning the laser light, to thereby uniformly irradiate the laser light to the attachment position A.

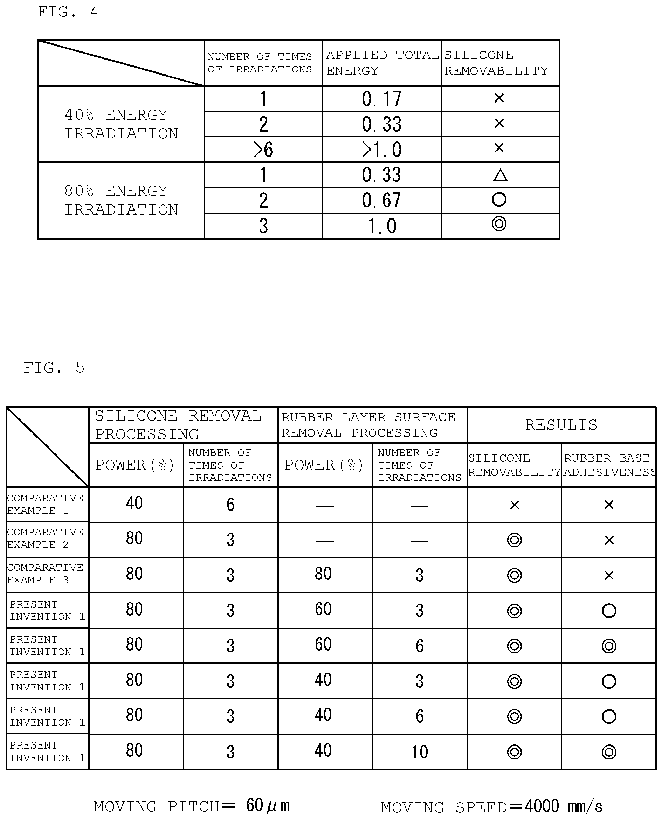

As illustrated in the table of FIG. 4, when the irradiation energy of the laser light is set to P₁ = 0.8 × P₀, most of the silicone layer 12 can be removed by two times of irradiations. When the irradiation is performed three times, the silicone layer 12 can be removed completely.

Incidentally the "applied total energy" in the table of FIG. 4 is (irradiation energy P) × (number of times of irradiations n), and is represented by indices where one (1) indicates a case in which the irradiation energy is P₁ and the number of times of irradiations is three times.

Whereas, in the case where the irradiation energy of laser light is set to P₂ = 0.4 × P₀, even though the applied total energy exceeded one (1), the silicone layer 12 could not be removed.

It is conceivable that this result came out because when the irradiation energy of the laser light is Pₛ or more, where P₂ < Pₛ < P₁, C/B (carbon) contained in the rubber member of the inner liner 11 generates heat, and by this heat generation, the silicone is melted and evaporated.

Meanwhile, it is conceivable that when the irradiation energy of the laser light is less than Pₛ, the C/B cannot generate heat, and even if the applied total energy exceeds one (1), the silicone is not melted and evaporated, hence as a result, the silicone layer 12 was not removed.

In the case where the irradiation energy of the laser light is not less than Pₛ, as illustrated in FIG. 3B, the silicon layer could be removed, however, not only a silicone bleed object 11a was remained on the surface, but also an altered layer 11b was formed on the surface of the rubber member of the inner liner 11. Therefore, in the laser processing in the step S13 only, the silicone layer 12 could be removed, but it was difficult to obtain an adhesive force equivalent to that of the rubber member on which the silicone layer 12 is not attached.

Thus, in the present embodiment, as illustrated in FIGS. 3C and 3D, a silicone bleed object 11a remaining on the surface of the rubber member and an altered layer 11b on the surface of the rubber member of the inner liner 11 are removed by performing the laser processing again, so as to secure the adhesive force equivalent to that of the rubber member before the silicone layer 12 is adhered thereon.

That is, in the step S14, the output of the laser device 30 is set to P₂ = 0.4 × P₀, and similarly to the step S13, the attachment position A wherefrom the silicon layer 12 has been removed is subjected to the rubber layer surface removal processing in which the laser light is irradiated three times uniformly.

Since the irradiation energy P₂ of the laser light is low energy (P₂ < Pₛ), C/B does not generate heat, and the rubber member can be removed little by little. Therefore, as illustrated in the figures, the bleeding object and the altered layer on the surface of the rubber member can be reliably removed without damaging the rubber member of the inner liner 11, so that the state of the surface of the rubber member of the inner liner 11 can be brought into substantially the same state as that of the rubber member before the silicone layer 12 is adhered.

Finally, as illustrated in the figure, after applying an adhesive agent to the attachment position A that has been subjected to the rubber layer surface removal processing (step S15), as illustrated in FIG. 3E, the rubber base 31 having the sensor module 32 mounted thereon is adhered to the surface of the inner liner 11 (step S16). In FIG. 3E, the reference numeral 14 denotes an adhesive layer.

### [Embodiments]

The table of FIG. 5 illustrates results of examination of the silicone removability and the rubber adhesiveness after irradiating the laser light on the surface of an inner liner having a silicone layer formed on the tire inner surface side.

The moving pitch of the laser light is 60 µm and the moving speed is 4,000 mm/s.

In Embodiment 1, the irradiation energy in the silicone removal processing was P₁ = 0.8 × P₀, the number of times of irradiations was n₁ = 3 times, the irradiation energy in the rubber layer surface removal processing was P₂ = 0.6 × P₀, and the number of times of irradiations was n₂ = 3 times.

Embodiment 2 is the same as that of the Embodiment 1 except that the number of times of irradiations in the rubber layer surface removal processing was n₂ = 6 times.

Embodiment 3 is the same as that of the Embodiment 1 except that the irradiation energy in the rubber layer surface removal processing was P₂ = 0.4 × P₀ and the number of times of irradiations was n₂ = 3 times.

Embodiment 4 is the same as that of the Embodiment 1 except that the irradiation energy in the rubber layer surface removal processing was P₂ = 0.4 × P₀ and the number of times of irradiations was n₂ = 6 times.

Embodiment 5 is the same as that of the Embodiment 1 except that the irradiation energy in the rubber layer surface removal processing was P₂ = 0.4 × P₀ and the number of times of irradiations was n₂ = 10 times.

In Comparative Example 1, the irradiation energy in the silicone removal processing was P₁ = 0.4 × P₀ and the number of times of irradiations was n₁ = 6 times, and the rubber layer surface removal processing was not performed.

In Comparative Example 2, the irradiation energy in the silicone removal processing was P₁ = 0.8 × P₀ and the number of times of irradiations was n₁ = 3 times, and the rubber layer surface removal processing was not performed.

In Comparative Example 3, both of the irradiation energy and the number of times of irradiations in the silicone removal processing, and the irradiation energy and the number of times of irradiations in the rubber layer surface removal processing were set to P₁ = 0.8 ×P₀ and n₁ = 3 times.

As illustrated in the table of FIG. 5, when the irradiation energy in the silicone removal processing is small, the silicone layer could not be removed.

Further, when high irradiation energy P₁ was irradiated in the silicone removal processing, the silicone layer could be removed, but the adhesiveness was not improved.

Furthermore, it was confirmed that when the rubber layer surface removal processing is not performed, the adhesiveness is not improved.

In addition, also in the case where the rubber layer surface removal processing was performed with high-energy laser light, the adhesiveness was not improved.

On the other hand, it was confirmed that, as in Embodiments 1 and 2, when the silicone removal processing was performed with high-energy laser light and the rubber layer surface removal processing was performed with low-energy laser light, not only the silicone can be sufficiently removed but also the adhesiveness after the processing is improved.

In addition, as in Embodiments 3 to 5, it was found that even when the irradiation energy P₂ in the rubber layer surface removal processing is set from 0.6 × P₀ of Embodiments 1 and 2 to 0.4 ×P₀, the state of the surface of the rubber member of the inner liner can be made to be an excellent state in terms of the adhesiveness as substantially the same with that of the rubber member before the silicone layer is attached.

As can be seen from comparison between Embodiments 1 and 2 and Embodiments 3 to 5, in the rubber layer surface removal processing, the adhesiveness is improved as the number of times of irradiations is increased. Therefore, it was found that the thickness of the rubber to be removed by the rubber layer surface removal processing is preferably about 60 µm, although it depends on the magnitude of the applied total energy in the silicone removal processing.

The present invention has been explained using the exemplary embodiments, however, the technical scope of the present invention is not limited to the scope described in the above exemplary embodiments. It is apparent to those skilled in the art that various changes and modifications may be added to the exemplary embodiments. It is also apparent from the scope of the claims that embodiments with such changes or modifications may also be included within the technical scope of the present invention.

For example, in the exemplary embodiments described above, the irradiation energy of the laser light and the number of times of irradiations in the silicone removal processing were set to P₁ = 0.8 × P₀ and n₁ = 3 times, and the irradiation energy of the laser light and the number of times of irradiations in the rubber surface removal processing were set to P₂ = 0.4 × P₀ and n₂ = 3 times. However, P₁, P₂ and n₁, n₂ are not limited to the above-mentioned values, and P₁ and n₁ may be values by which the silicone layer 12 can be removed, and P₂ may be set to be smaller than P₁. It is desirable that P₂ and n₂ are such values by which the silicone layer 12 cannot be removed even if P₂ × n₂ > P₁ × n₁.

Further, P₀ may be appropriately determined according to a tire type or the like.

In the exemplary embodiments described above, after applying the adhesive agent to the attachment position A having been subjected to the rubber layer surface removal processing, the rubber base 21 was adhered to the surface of the inner liner 11. Alternatively, the rubber base 21 may be adhered to the inner liner 11 by applying the adhesive agent to the bottom surface of the rubber base 21.

Further, in the exemplary embodiments described above, as the rubber base, the rubber base 31 disposed between the sensor module 32 and the inner liner 11 was used, as illustrated in FIG. 7A. However, the rubber base 41 that houses the sensor module 42 may be used, as illustrated in FIG. 7B.

In summary, the present invention may be described as follows. Namely, according to an aspect of the present invention, there is provided a method of attaching a rubber member on an inner surface of a tire, including: a step (a) of identifying an attachment position for attaching the rubber member; a step (b) of irradiating laser light to the attachment position to remove a mold release agent applied layer formed on a surface of a rubber layer, which is located at the attachment position and which configures an inner liner; a step (c) of irradiating laser light with less irradiation energy than that of the laser light irradiated in the step (b) to the position where the mold release agent applied layer has been removed, to remove the surface of the rubber layer located at the attachment position; and a step (d) of adhering the rubber member to the attachment position.

Whereby, the release agent applied layer can be securely removed and the rubber layer on the surface of the inner liner whose adhesiveness has been deteriorated as having been damaged by the laser light irradiated in the step (b), can also be removed. Accordingly, the rubber member can be securely and firmly attached to the inner surface of the tire.

Further, when the irradiation energy of the laser light in the step (b) is P₁ and the number of times of irradiations in the step (b) is n times, and the irradiation energy of the laser light in the step (c) is P₂ and the number of times of irradiations in the step (c) is m times, the P₂ is such a magnitude that cannot remove the mold release agent applied layer even when P₂ × m > P₁ × n, so as to be able to efficiently remove only part of the rubber layer, which is located on the damaged surface, of the rubber layer on the surface of the inner liner.

Whereby, a rubber base having housed therein a sensor module provided with a sensor for acquiring information of the tire or a rubber base disposed between the inner liner and the sensor module provided with the sensor for acquiring the information of the tire, can be securely attached to the inner surface of the tire.

Furthermore, when a tire having a sensor module housed in the rubber base attached by the above-mentioned attaching method or having a sensor module mounted on the rubber base attached by the above-mentioned attaching method is used, information of a running tire, such as a tire inner pressure, a tire inner temperature, or vibration input to the tire or a deformation state of the tire, can be stably acquired.

### REFERENCE SIGN LIST

10 tire, 11 inner liner, 12 silicone layer, 20 laser device, 30 tire information acquisition device, 31 rubber base, 32 sensor module.

## Claims

1. A method of attaching a rubber member on an inner surface of a tire, comprising:
a step (a) of identifying an attachment position for attaching the rubber member;
a step (b) of irradiating laser light to the attachment position to remove a mold release agent applied layer formed on a surface of a rubber layer, which is located at the attachment position and which configures an inner liner;
a step (c) of irradiating laser light with less irradiation energy than that of the laser light irradiated in the step (b) to the position where the mold release agent applied layer has been removed, to remove the surface of the rubber layer located at the attachment position; and
a step (d) of adhering the rubber member to the attachment position.

2. The method of attaching a rubber member according to Claim 1, wherein, when the irradiation energy of the laser light in the step (b) is P₁ and the number of times of irradiations in the step (b) is n times, and the irradiation energy of the laser light in the step (c) is P₂ and the number of times of irradiations in the step (c) is m times, the P₂ is such a magnitude that cannot remove the mold release agent applied layer even when P₂ × m > P₁ × n.

3. The method of attaching a rubber member according to Claim 1 or Claim 2, wherein, the rubber member is a rubber base having housed therein a sensor module provided with a sensor for acquiring information of the tire.

4. The method of attaching a rubber member according to Claim 1 or Claim 2, wherein, the rubber member is a rubber base that is disposed between the inner liner and a sensor module provided with a sensor for acquiring information of the tire.

## Patentansprüche

1. Verfahren zum Anbringen eines Gummielements an einer Innenfläche eines Reifens, das Folgendes umfasst:
einen Schritt (a) des Identifizierens einer Anbringungsposition zum Anbringen des Gummielements;
einen Schritt (b) des Ausstrahlens von Laserlicht auf die Anbringungsposition, um eine aufgebrachte Formtrennmittellage zu entfernen, die auf einer Oberfläche einer Gummilage ausgebildet ist, die sich an der Anbringungsposition befindet und die einen Innerliner konfiguriert;
einen Schritt (c) des Ausstrahlens von Laserlicht mit geringerer Strahlungsenergie als diejenige des in dem Schritt (b) ausgestrahlten Laserlichts auf die Position, wo die aufgebrachte Formtrennmittellage entfernt worden ist, um die Oberfläche der Gummilage zu entfernen, die sich an der Anbringungsposition befindet; und
einen Schritt (d) des Anklebens des Gummielements an die Anbringungsposition.

2. Verfahren zum Anbringen eines Gummielements nach Anspruch 1, wobei, wenn die Strahlungsenergie des Laserlichts in dem Schritt (b) P₁ ist, und die Anzahl von Malen von Bestrahlungen in dem Schritt (b) n Male ist, und die Strahlungsenergie des Laserlichts in dem Schritt (c) P₂ ist, und die Anzahl von Malen von Bestrahlungen in dem Schritt (c) m Male ist, P₂ eine solche Größe ist, welche die aufgebrachte Formtrennmittellage nicht entfernen kann, selbst wenn P₂ × m > P₁ × n ist.

3. Verfahren zum Anbringen eines Gummielements nach Anspruch 1 oder Anspruch 2, wobei das Gummielement eine Gummibasis ist, die darin ein Sensormodul untergebracht hat, das mit einem Sensor zum Erfassen von Informationen des Reifens versehen ist.

4. Verfahren zum Anbringen eines Gummielements nach Anspruch 1 oder Anspruch 2, wobei das Gummielement eine Gummibasis ist, die zwischen dem Innerliner und einem Sensormodul, das mit einem Sensor zum Erfassen von Informationen des Reifens versehen ist, angeordnet ist.

## Revendications

1. Procédé de fixation d'un élément en caoutchouc sur une surface interne d'un pneumatique, comprenant :
une étape (a) d'identification d'une position de fixation pour fixer l'élément en caoutchouc ;
une étape (b) d'irradiation d'une lumière laser sur la position de fixation pour retirer une couche appliquée d'un agent de démoulage formée sur une surface d'une couche en caoutchouc, qui est située au niveau de la position de fixation et qui configure un calandrage intérieur ;
une étape (c) d'irradiation de lumière laser avec une énergie d'irradiation inférieure à celle de la lumière laser irradiée lors de l'étape (b) sur la position où la couche appliquée d'agent de démoulage a été retirée, pour retirer la surface de la couche de caoutchouc située au niveau de la position de fixation ; et
une étape (d) de collage de l'élément en caoutchouc sur la position de fixation.

2. Procédé de fixation d'un élément en caoutchouc selon la revendication 1, dans lequel, lorsque l'énergie d'irradiation de la lumière laser lors de l'étape (b) correspond à P₁ et le nombre d'irradiations lors de l'étape (b) correspond à n fois, et l'énergie d'irradiation de la lumière laser lors de l'étape (c) correspond à P₂, et le nombre d'irradiations lors de l'étape (c) est de m fois, P₂ est d'une amplitude telle qu'elle ne peut pas retirer la couche appliquée d'agent de démoulage, même si P₂ × m > P₁ × n.

3. Procédé de fixation d'un élément en caoutchouc selon les revendications 1 ou 2, dans lequel l'élément en caoutchouc est une base de caoutchouc dans laquelle est logé un module capteur doté d'un capteur pour acquérir des informations sur le pneumatique.

4. Procédé de fixation d'un élément en caoutchouc selon les revendications 1 ou 2, dans lequel l'élément en caoutchouc est une base de caoutchouc disposée entre le calandrage intérieur et un module capteur doté d'un capteur pour acquérir des informations sur le pneumatique.
